# EUROPEAN PATENT APPLICATION

(11) **EP 4 806 679 A1**
(43) Date of publication of application: **16.09.2026**
(21) Application number: 24896317.5
(22) Date of filing: 18.11.2024
(51) Int. Cl.: B60H 1/00, B60H 1/32

(54) **INTEGRATED COMPONENT AND SYSTEM FOR THERMAL MANAGEMENT, AND VEHICLE**

(30) Priority: 30.11.2023 CN 202311641843
(71) Applicant: Yinwang Intelligent Technologies Co., Ltd., Shenzhen, Guangdong 518110 (CN)
(72) Inventor: ZHU, Xiaoyong, Shenzhen, Guangdong 518129 (CN); ZHANG, Hualiang, Shenzhen, Guangdong 518129 (CN)
(74) Representative: Maiwald GmbH
(86) International application number: PCT/CN2024/132762
(87) International publication number: WO 2025/113226

(57) **Abstract**

A thermal management integration assembly, a system, and a vehicle are provided. The thermal management integration assembly includes a base plate, a refrigerant module, a first heat exchange device, a second heat exchange device, a multi-way valve, and a water pump. A refrigerant flow channel is disposed in the refrigerant module. An area of the refrigerant module is less than an area of the base plate. The base plate includes a first side and a second side, and an orientation of the first side is opposite to an orientation of the second side. The multi-way valve and the water pump are disposed on the first side of the base plate, and the multi-way valve and the water pump communicate with a coolant flow channel in the base plate. The refrigerant module, the first heat exchange device, and the second heat exchange device are disposed on the second side of the base plate. The first heat exchange device and the second heat exchange device communicate with the refrigerant flow channel in the refrigerant module. Solutions of this application can be used to reduce costs of integration of a thermal management system.

## Description

This application claims priority to Chinese Patent Application No. 202311641843.5, filed with the China National Intellectual Property Administration on November 30, 2023 and entitled "THERMAL MANAGEMENT INTEGRATION ASSEMBLY, SYSTEM, AND VEHICLE", which is incorporated herein by reference in its entirety.

### TECHNICAL FIELD

This application relates to the field of thermal management technologies, and specifically, to a thermal management integration assembly, a system, and a vehicle.

### BACKGROUND

With continuous development of vehicles, integration of a thermal management system of an entire vehicle becomes a trend to improve manufacturing and assembly efficiency, facilitate quality management and control, and reduce space occupied by the thermal management system. Currently, however, the integration of the thermal management system is costly, and reducing costs of the integration of the thermal management system becomes an urgent problem to be resolved.

### SUMMARY

This application provides a thermal management integration assembly, a system, and a vehicle, to reduce costs of integration of a thermal management system.

According to a first aspect, this application provides a thermal management integration assembly. The thermal management integration assembly includes a base plate, a refrigerant module, a first heat exchange device, a second heat exchange device, a multi-way valve, and a water pump.

A refrigerant flow channel is disposed in the refrigerant module, and an area of the refrigerant module is less than an area of the base plate.

The base plate includes a first side and a second side, and an orientation of the first side is opposite to an orientation of the second side.

The multi-way valve and the water pump are disposed on the first side of the base plate, and the multi-way valve and the water pump communicate with a coolant flow channel in the base plate.

The refrigerant module, the first heat exchange device, and the second heat exchange device are disposed on the second side of the base plate, and the first heat exchange device and the second heat exchange device communicate with the refrigerant flow channel in the refrigerant module.

In the foregoing solution, a refrigerant flow channel in a refrigerant base plate is concentrated in a refrigerant module that has a small area, and then two heat exchange devices originally disposed on the refrigerant base plate are directly disposed with the refrigerant module on a base plate integrating a coolant flow channel, so that a height of the refrigerant base plate is reduced. In addition, the refrigerant base plate is made of a metal material with high pressure resistance and is costly in material and manufacturing, but the refrigerant module is much smaller than the original refrigerant base plate, so that costs of materials and manufacturing are reduced, and a weight is also reduced. Based on this, the solution greatly improves a degree of integration of the thermal management integration assembly, and reduces a volume and a weight of the thermal management integration assembly overall, so that occupied space is reduced.

In a possible implementation, a proportion of the area of the refrigerant module to the area of the base plate ranges from 30% to 70%.

In the foregoing solution, the area proportion of the refrigerant module to the base plate is in the area proportion range, so that costs of the refrigerant module can be maximally reduced, and it can be ensured that a required quantity of refrigerant flow channels can be disposed in the refrigerant module. In other words, costs and functions are considered.

In a possible implementation, the water pump includes a first water pump, a second water pump, and a third water pump, and the multi-way valve, the first water pump, the second water pump, and the third water pump are arranged in sequence along a longer edge of the first side of the base plate.

In the foregoing solution, because the multi-way valve and the water pumps all communicate with the coolant flow channel in the base plate, such an arrangement can optimize an arrangement of the coolant flow channel in the base plate, and reduce intersection of flow channels, to maximize use of the area of the base plate to arrange more flow channels, so as to improve utilization of the base plate.

In a possible implementation, a first refrigerant flow channel port is provided on the refrigerant module.

The first heat exchange device includes a first refrigerant inlet and a first refrigerant outlet, the first refrigerant inlet is located on a first side of the first heat exchange device, and the first refrigerant outlet is located on a second side that faces away from the first side of the first heat exchange device.

The first refrigerant inlet is configured to communicate with a compressor, and the first refrigerant outlet is aligned with and communicates with the first refrigerant flow channel port.

In the foregoing solution, the refrigerant inlet of the first heat exchange device is configured to communicate with the compressor, and the compressor is not integrated on the refrigerant module. Therefore, the refrigerant inlet of the first heat exchange device does not communicate with a refrigerant flow channel port of the refrigerant module, but is designed on another side to facilitate communication with the compressor, and there is no need to dispose, in the refrigerant module, a flow channel connecting a refrigerant port of the compressor to the refrigerant inlet of the first heat exchange device, so that the area of the refrigerant module is reduced, to reduce costs.

In a possible implementation, the first heat exchange device includes a first coolant inlet and a first coolant outlet, and the first coolant inlet and the first coolant outlet are located on the second side of the first heat exchange device.

A first coolant flow channel port and a second coolant flow channel port are provided on the second side of the base plate.

The first coolant inlet is aligned with and communicates with the first coolant flow channel port, and the first coolant outlet is aligned with and communicates with the second coolant flow channel port.

In the foregoing solution, the port of the heat exchange device is aligned with and communicates with the coolant flow channel port of the base plate directly, with no need for a pipeline or another flow channel for communication. This reduces communication sealing interfaces, and reduces flow resistance caused by pipeline communication.

In a possible implementation, a second refrigerant flow channel port is provided on the refrigerant module.

The second heat exchange device includes a second refrigerant inlet and a second refrigerant outlet, the second refrigerant inlet is located on a first side of the second heat exchange device, and the second refrigerant outlet is located on a second side that faces away from the first side of the second heat exchange device.

The second refrigerant inlet is aligned with and communicates with the second refrigerant flow channel port, and the second refrigerant outlet is configured to communicate with the compressor.

In the foregoing solution, the refrigerant outlet of the second heat exchange device is configured to communicate with the compressor, and the compressor is not integrated on the refrigerant module. Therefore, the refrigerant outlet of the second heat exchange device does not communicate with a refrigerant flow channel port of the refrigerant module, but is designed on another side to facilitate communication with the compressor, and there is no need to dispose, in the refrigerant module, a flow channel connecting a refrigerant port of the compressor to the refrigerant outlet of the second heat exchange device, so that the area of the refrigerant module is reduced, to reduce costs.

In a possible implementation, the second heat exchange device includes a second coolant inlet and a second coolant outlet, and the second coolant inlet and the second coolant outlet are located on the first side of the second heat exchange device.

A third coolant flow channel port and a fourth coolant flow channel port are provided on the second side of the base plate.

The second coolant inlet is aligned with and communicates with the third coolant flow channel port, and the second coolant outlet is aligned with and communicates with the fourth coolant flow channel port.

In the foregoing solution, the port of the heat exchange device is aligned with and communicates with the coolant flow channel port of the base plate directly, with no need for a pipeline or another flow channel for communication. This reduces communication sealing interfaces, and reduces flow resistance caused by pipeline communication.

In a possible implementation, the thermal management integration assembly further includes a refrigerant container, and a third refrigerant flow channel port and a fourth refrigerant flow channel port are provided on the refrigerant module.

The refrigerant container is integrated on the refrigerant module, and communicates with the refrigerant flow channel in the refrigerant module through the third refrigerant flow channel port and the fourth refrigerant flow channel port, and the refrigerant container is located between the first heat exchange device and the second heat exchange device.

In the foregoing solution, the refrigerant container may be further integrated on the refrigerant module, to improve a degree of integration. In addition, the refrigerant container is disposed between the two heat exchange devices, so that a short refrigerant transfer path can be implemented.

In a possible implementation, the refrigerant container includes a first side and a second side, and an orientation of the first side of the refrigerant container is opposite to an orientation of the second side of the refrigerant container.

A third refrigerant inlet and a third refrigerant outlet are provided on the first side of the refrigerant container, the third refrigerant inlet is aligned with and communicates with the third refrigerant flow channel port on the refrigerant module, and the third refrigerant outlet is aligned with and communicates with the fourth refrigerant flow channel port on the refrigerant module.

The second side of the refrigerant container is the bottom of the refrigerant container, and a direction from the second side of the refrigerant container to the first side of the refrigerant container is perpendicular to the refrigerant module; or
a direction from the second side of the refrigerant container to the first side of the refrigerant container is parallel to the refrigerant module.

In the foregoing solution, a tank body of the refrigerant container is perpendicular to the refrigerant module, which can mitigate impact on a refrigerant loop caused when a refrigerant in the tank body is insufficient to be supplied normally. In addition, having the tank body perpendicular to the refrigerant module can also facilitate replacement with a longer tank body to increase a refrigerant capacity. In addition, the tank body of the refrigerant container may alternatively be placed in parallel to the refrigerant module, and the arrangement is flexible.

In a possible implementation, the thermal management integration assembly further includes an expansion valve, a fifth refrigerant flow channel port is provided on the refrigerant module, and the expansion valve is integrated on the refrigerant module, and communicates with the refrigerant flow channel in the refrigerant module through the fifth refrigerant flow channel port.

In the foregoing solution, the expansion valve may be further integrated on the refrigerant module, to improve a degree of integration.

According to a second aspect, this application provides a thermal management system. The thermal management system includes the thermal management integration assembly according to any one of the first aspect.

According to a third aspect, this application provides a vehicle. The vehicle includes the thermal management integration assembly according to any one of the first aspect, or the vehicle includes the thermal management system according to the second aspect.

### BRIEF DESCRIPTION OF DRAWINGS

FIG. 1 and FIG. 2 are diagrams of a structure of a thermal management integration assembly according to an embodiment of this application;
FIG. 2A is a diagram of a structure of a refrigerant module according to an embodiment of this application;
FIG. 3 to FIG. 6 are diagrams of a structure of a thermal management integration assembly according to an embodiment of this application;
FIG. 6A, FIG. 7, and FIG. 7A are diagrams of a structure of a thermal management integration assembly according to an embodiment of this application;
FIG. 8 and FIG. 9 are diagrams of a structure of a thermal management integration assembly according to an embodiment of this application;
FIG. 10 to FIG. 13 are diagrams of a layout position relationship according to an embodiment of this application;
FIG. 14 is a diagram of a structure of a thermal management system according to an embodiment of this application; and
FIG. 15 is a diagram of a structure of a vehicle according to an embodiment of this application.

Reference numerals:
00: thermal management integration assembly; 01 to 30: port; 100: base plate; 110: multi-way valve; 111 (including 1111, 1112, and 1113): water pump; 120: refrigerant module; 121: first heat exchange device; 122: second heat exchange device; 123: refrigerant container; 124: expansion valve.

### DESCRIPTION OF EMBODIMENTS

In embodiments of this application, ''a plurality of'' means two or more than two. In embodiments of this application, "and/or" is used to describe an association relationship between associated objects, and indicates three relationships that may exist independently. For example, A and/or B may indicate the following cases: Only A exists, only B exists, or both A and B exist. A description manner, for example, "at least one (or at least one piece) of a1, a2, ..., and an", used in embodiments of this application includes a case in which any one of a1, a2, ..., and an exists alone, and also includes any combination of any plurality of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

Terms such as "first" and "second" in this application are used to distinguish between same or similar items with basically same roles and functions. It should be understood that there is no logical or timing dependency between "first", "second", and "nth", and neither a quantity nor an execution sequence is limited. It should be further understood that, although the following descriptions use terms such as "first" and "second" to describe various elements, these elements shall not be limited by the terms. These terms are merely used to distinguish one element from another element.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

A thermal management integration assembly and a thermal management system (the thermal management system includes the thermal management integration assembly) provided in embodiments of this application are applicable to a vehicle, and are also applicable to another thermal management scenario that requires cooling (heat dissipation) and/or heating. For example, the thermal management integration assembly and the thermal management system provided in embodiments of this application may be used in an electric vehicle. Specifically, the electric vehicle is a transportation tool driven by an electric drive to travel. The electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), a new energy vehicle (new energy vehicle, NEV), or the like.

The thermal management system in embodiments of this application can heat or dissipate heat from a managed object by using water. In some possible implementations, the managed object may be an occupant compartment, a battery, an electric drive, a control system, and the like. In this application, water is used to transfer thermal energy. In some possible implementations, the thermal management system in this application can further heat or dissipate heat from the managed object by using a coolant such as water and a refrigerant (refrigerant). The refrigerant may transfer heat through evaporation and condensation. It should be understood that water may alternatively be replaced with another coolant to transfer thermal energy. This is not specifically limited in embodiments of this application.

Currently, a thermal management system is costly in integration and has a large volume. It is found through analysis that a refrigerant base plate for integrating components of a refrigerant system is costly due to a manufacturing and processing method and materials, and the refrigerant base plate has an excessively large area and has a specific thickness and volume. As a result, an integrated thermal management integration assembly has a large volume. To reduce costs of integration and a volume of a thermal management system, embodiments of this application provide a thermal management integration assembly. The following provides example descriptions.

For example, during specific implementation, a thermal management integration assembly 00 provided in embodiments of this application includes a base plate 100, a multi-way valve 110, a water pump 111, a refrigerant module 120, a first heat exchange device 121, and a second heat exchange device 122. A refrigerant flow channel is disposed in the refrigerant module 120. In addition, an area of the refrigerant module 120 is less than an area of the base plate 100. The base plate 100 includes a first side and a second side, and an orientation of the first side is opposite to an orientation of the second side. The multi-way valve 110 and the water pump 111 are disposed on the first side of the base plate 100. The multi-way valve 110 and the water pump 111 communicate with a coolant flow channel in the base plate 100. The refrigerant module 120, the first heat exchange device 121, and the second heat exchange device 122 are disposed on the second side of the base plate 100. The first heat exchange device 121 and the second heat exchange device 122 communicate with the refrigerant flow channel in the refrigerant module.

For example, the refrigerant flow channel is also referred to as a refrigerant passage, and the refrigerant flow channel may replace an air conditioner pipe in a thermal management system.

For example, the coolant flow channel is also referred to as a coolant passage, and the coolant flow channel may replace a water pipe in the thermal management system.

For example, the base plate 100 may be an injection molding part made of plastic, a metal base plate made of metal, or a base plate made of another material. This is not limited in embodiments of this application.

For example, the multi-way valve 110 may be an eight-way valve or a nine-way valve. This is not limited in embodiments of this application.

For example, the refrigerant module 120 may be a plate made of metal. For example, to achieve high pressure resistance and high gas tightness of the refrigerant flow channel to ensure flow of a high-pressure refrigerant, the refrigerant module 120 may be manufactured by using a forging processing method.

For example, the first heat exchange device 121 may be a heat exchange device such as a condenser. For example, the second heat exchange device 122 may be a heat exchange device such as a cooler. Specific types and forms of the two heat exchange devices are not limited in embodiments of this application.

For example, the refrigerant module 120, the first heat exchange device 121, and the second heat exchange device 122 may be integrated on the second side of the base plate 100 through bolted connection, hinged connection, ultrasonic connection, welding, or the like. This is not limited in embodiments of this application.

For ease of understanding a structure of the thermal management integration assembly 00 provided in embodiments of this application, the following provides example descriptions with reference to accompanying drawings. It may be understood that forms and sizes of components in the accompanying drawings shown in embodiments of this application are merely examples, and are not intended to limit embodiments of this application.

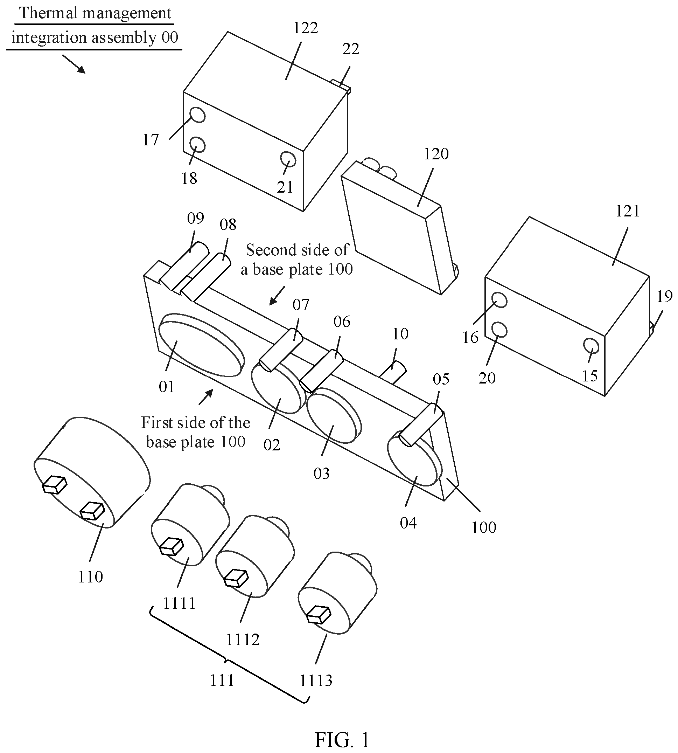

In a possible implementation, for example, FIG. 1 is an exploded view of the structure of the thermal management integration assembly 00 according to an embodiment of this application. In FIG. 1, the water pump 111 may include, for example, three water pumps: a water pump 1111, a water pump 1112, and a water pump 1113.

It can be learned from FIG. 1 that the base plate 100 may include the first side and the second side. A port 01 to a port 04 are provided on the first side of the base plate 100. The port 01 is configured to communicate with the multi-way valve 110, so that the multi-way valve 110 communicates with the coolant flow channel disposed in the base plate 100. The port 02 is configured to communicate with the water pump 1111, so that the water pump 1111 communicates with the coolant flow channel disposed in the base plate 100. The port 03 is configured to communicate with the water pump 1112, so that the water pump 1112 communicates with the coolant flow channel disposed in the base plate 100. The port 04 is configured to communicate with the water pump 1113, so that the water pump 1113 communicates with the coolant flow channel disposed in the base plate 100.

For example, as shown in FIG. 1, the multi-way valve 110, the water pump 1111, the water pump 1112, and the water pump 1113 may be arranged in sequence along a longer edge of the first side of the base plate 100. Such an arrangement can optimize an arrangement of the coolant flow channel in the base plate 100, and reduce intersection of flow channels, to maximize use of the area of the base plate 100 to arrange more flow channels, so as to improve utilization of the base plate 100.

For example, a port 05, a port 06, and a port 07 are further provided on the first side of the base plate 100. The port 05, the port 06, and the port 07 communicate with the coolant flow channel in the base plate 100, and are further configured to communicate with a loop in the thermal management system. For example, the port 05 communicates with a water heater (positive temperature coefficient, PTC), and the port 06 and the port 07 communicate with a battery loop. It may be understood that this is merely an example. Components that specifically communicate with the port 05, the port 06, and the port 07 are not limited in embodiments of this application, and may be specifically determined based on an actual design of a thermal management loop.

For example, a port 08, a port 09, and a port 10 are provided on the second side of the base plate 100. The port 08, the port 09, and the port 10 communicate with the coolant flow channel in the base plate 100, and are further configured to communicate with a loop in the thermal management system. For example, the port 08 and the port 10 are configured to communicate with ports of an electric drive module, and the port 09 is configured to communicate with a radiator. It may be understood that this is merely an example. Components that specifically communicate with the port 08, the port 09, and the port 10 are not limited in embodiments of this application, and may be specifically determined based on an actual design of a thermal management loop.

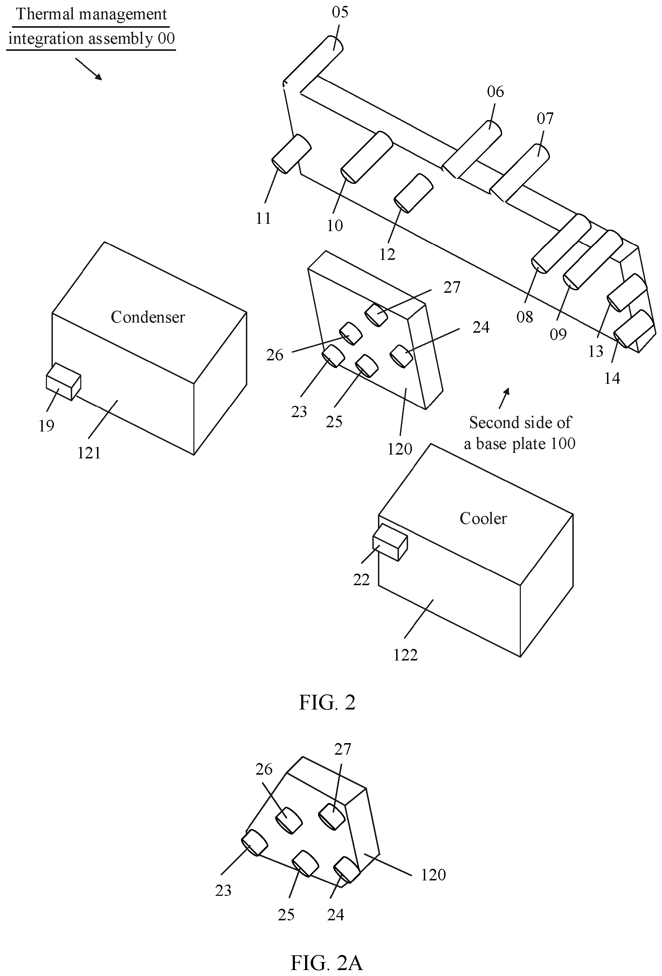

For example, another port may be further provided on the second side of the base plate 100. For example, FIG. 2 is an exploded view of a structure on the second side of the base plate 100. It can be learned that a port 11 to a port 14 may be further provided on the second side of the base plate 100. The port 11 to the port 14 communicate with the coolant flow channel in the base plate 100. The port 11 and the port 12 are further configured to communicate with the first heat exchange device 121, and the port 13 and the port 14 are further configured to communicate with the second heat exchange device 122. For ease of understanding, the following provides descriptions with reference to the first heat exchange device 121 and the second heat exchange device 122 that are shown in FIG. 1.

For example, in FIG. 1, the first heat exchange device 121 includes a port 15 and a port 16. One of the port 15 and the port 16 is a coolant inlet of the first heat exchange device 121, and the other is a coolant outlet of the first heat exchange device 121. A specific inlet or outlet is determined according to an actual application requirement. This is not limited in embodiments of this application. The second heat exchange device 122 includes a port 17 and a port 18. One of the port 17 and the port 18 is a coolant inlet of the second heat exchange device 122, and the other is a coolant outlet of the second heat exchange device 122. A specific inlet or outlet is determined according to an actual application requirement. This is not limited in embodiments of this application. With reference to FIG. 1 and FIG. 2, the port 11 on the second side of the base plate 100 is aligned with and communicates with the port 15 of the first heat exchange device 121. The port 12 on the second side of the base plate 100 is aligned with and communicates with the port 16 of the first heat exchange device 121. The port 13 on the second side of the base plate 100 is aligned with and communicates with the port 17 of the second heat exchange device 122. The port 14 on the second side of the base plate 100 is aligned with and communicates with the port 18 of the second heat exchange device 122.

For example, the port 12 may pass through a through hole (not shown in FIG. 1 and FIG. 2) of the refrigerant module 120 to be aligned with and communicate with the port 16 of the first heat exchange device 121. Alternatively, for example, a shape of the refrigerant module 120 may be shown in FIG. 2A. Such a design facilitates alignment and communication between the port 12 and the port 16 of the first heat exchange device 121, and can further reduce the area of the refrigerant module 120 to reduce costs. It may be understood that the shape of the refrigerant module 120 described herein is merely an example, and does not constitute a limitation on embodiments of this application. For example, the shape of the refrigerant module 120 may be a regular polygon or may be any irregular shape. The specific shape of the refrigerant module 120 is not limited in embodiments of this application.

For example, it can be further learned from FIG. 1 that the first heat exchange device 121 further includes a port 19 and a port 20. The port 19 may be a refrigerant inlet of the first heat exchange device 121, and the port 20 may be a refrigerant outlet of the first heat exchange device 121. For example, the port 19 may be configured to communicate with a compressor. For example, the port 19 may be configured to communicate with an outlet of the compressor.

For example, it can be further learned from FIG. 1 that the second heat exchange device 122 further includes a port 21 and a port 22. The port 21 may be a refrigerant inlet of the second heat exchange device 122, and the port 22 may be a refrigerant outlet of the second heat exchange device 122. For example, the port 22 may be configured to communicate with the compressor. For example, the port 22 may be configured to communicate with an inlet of the compressor.

For example, the port 20 and the port 21 are aligned with and communicate with refrigerant flow channel ports on the refrigerant module 120. For ease of understanding, descriptions are provided with reference to the refrigerant module 120 shown in FIG. 2. It can be learned from FIG. 2 that a port 23 to a port 27 are provided on the refrigerant module 120. The port 23 to the port 27 communicate with the refrigerant flow channel disposed in the refrigerant module 120. The port 20 of the first heat exchange device 121 may be aligned with and communicate with the port 23 on the refrigerant module 120. The port 21 of the second heat exchange device 122 may be aligned with and communicate with the port 24 on the refrigerant module 120.

For example, it can be learned from FIG. 1 that the port 19 is provided on a side (briefly referred to as a first side) of the first heat exchange device 121. The port 20, the port 15, and the port 16 are provided on another side (briefly referred to as a second side) of the first heat exchange device 121. An orientation of the second side of the first heat exchange device 121 is opposite to an orientation of the first side of the first heat exchange device 121. In other words, the second side of the first heat exchange device 121 faces away from the first side of the first heat exchange device 121. In addition, the second side of the first heat exchange device 121 may be a side that is in contact with and connected to the base plate 100. It may be understood that the refrigerant inlet (namely, the port 19) of the first heat exchange device 121 is configured to communicate with the compressor, and the compressor is not integrated on the refrigerant module 120. Therefore, the port 19 of the first heat exchange device 121 does not communicate with a refrigerant flow channel port of the refrigerant module 120. In this case, the port 19 is designed on another side (that is, the first side of the first heat exchange device 121) to facilitate communication with the compressor, and there is no need to dispose, in the refrigerant module 120, a flow channel connecting a port of the compressor to the port 19 of the first heat exchange device 121, so that the area of the refrigerant module 120 is reduced, to reduce costs.

Similarly, for example, it can be learned from FIG. 1 that the port 21, the port 17, and the port 18 are provided on a side (briefly referred to as a first side) of the second heat exchange device 122. The port 22 is provided on another side (briefly referred to as a second side) of the second heat exchange device 122. An orientation of the second side of the second heat exchange device 122 is opposite to an orientation of the first side of the second heat exchange device 122. In other words, the second side of the second heat exchange device 122 faces away from the first side of the second heat exchange device 122. In addition, the first side of the second heat exchange device 122 may be a side that is in contact with and connected to the base plate 100. It may be understood that the refrigerant outlet (namely, the port 22) of the second heat exchange device 122 is configured to communicate with the compressor, and the compressor is not integrated on the refrigerant module. Therefore, the port 22 of the second heat exchange device 122 does not communicate with a refrigerant flow channel port of the refrigerant module 120. In this case, the port 22 is designed on the another side (that is, the second side of the second heat exchange device 122) to facilitate communication with the compressor, and there is no need to dispose, in the refrigerant module 120, a flow channel connecting a port of the compressor to the port 22 of the second heat exchange device 122, so that the area of the refrigerant module 120 is reduced, to reduce costs.

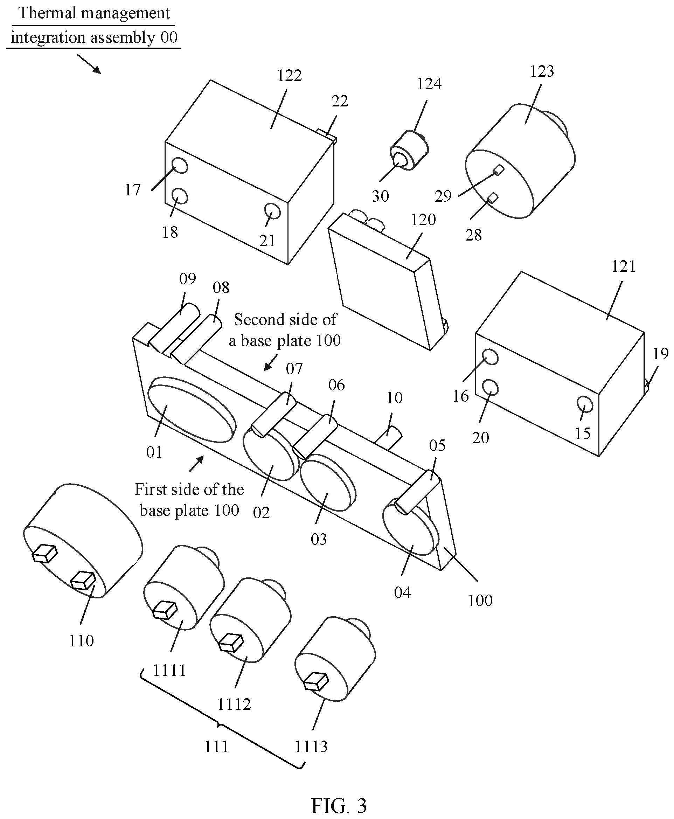

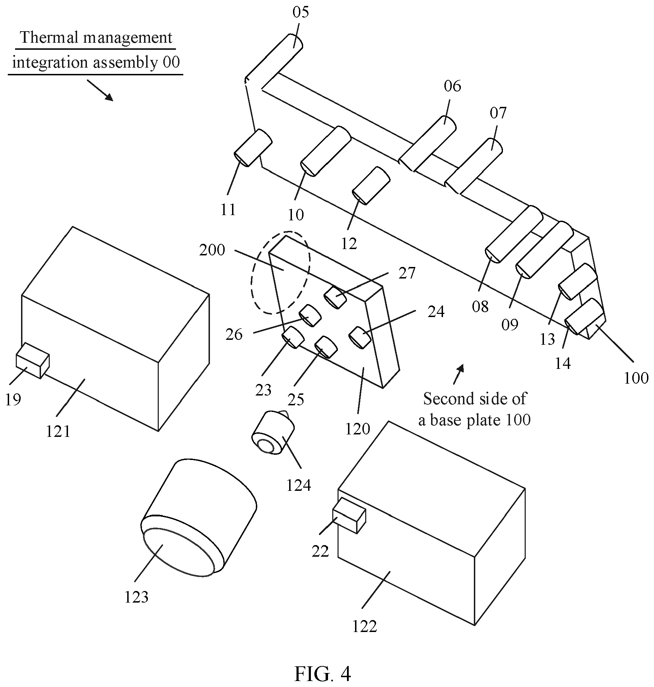

For example, the port 25 and the port 26 on the refrigerant module 120 may be configured to communicate with a refrigerant container 123, and the port 27 may be configured to communicate with an expansion valve 124. For ease of understanding, refer to FIG. 3 and FIG. 4. It can be learned from FIG. 3 that a port 28 and a port 29 are provided on the refrigerant container 123. One of the port 28 and the port 29 is a refrigerant inlet of the refrigerant container 123, and the other is a refrigerant outlet of the refrigerant container 123. A specific inlet or outlet is determined according to an actual application requirement. This is not limited in embodiments of this application. A port 30 is provided on the expansion valve 124. With reference to FIG. 4, the port 28 of the refrigerant container 123 communicates with the port 25 on the refrigerant module 120. The port 29 of the refrigerant container 123 communicates with the port 26 on the refrigerant module 120. The port 30 of the expansion valve 124 communicates with the port 27 on the refrigerant module 120.

In a possible implementation, the refrigerant container and/or the expansion valve may be integrated on the refrigerant module 120. In this case, the port 28 is aligned with and communicates with the port 25 directly, the port 29 is aligned with and communicates with the port 26 directly, and the port 30 is aligned with and communicates with the port 27 directly. Alternatively, in another possible implementation, the refrigerant container and/or the expansion valve may not be integrated on the refrigerant module 120. In this case, the port 28 communicates with the port 25 through a pipeline, the port 29 communicates with the port 26 through a pipeline, and the port 30 communicates with the port 27 through a pipeline. It may be understood that this is merely an example, and does not constitute a limitation on embodiments of this application.

For example, the refrigerant container 123 may be a liquid storage tank. A shape of the refrigerant container may be a cylinder, a cube, or any other shape. This is not limited in embodiments of this application.

For example, it can be learned from FIG. 1 that the area of the refrigerant module 120 is far less than the area of the base plate 100. For example, a proportion of the area of the refrigerant module 120 to the area of the base plate 100 may range from 30% to 70%. To ensure flow of a high-pressure refrigerant, the refrigerant module is costly in material (metal used needs to have high pressure resistance) and manufacturing. Therefore, in embodiments of this application, concentrating the refrigerant flow channel in the refrigerant module 120 that has a small area can effectively reduce costs. In addition, because the refrigerant module 120 is metal, reducing the area of the refrigerant module 120 can further reduce an overall weight of the thermal management integration assembly.

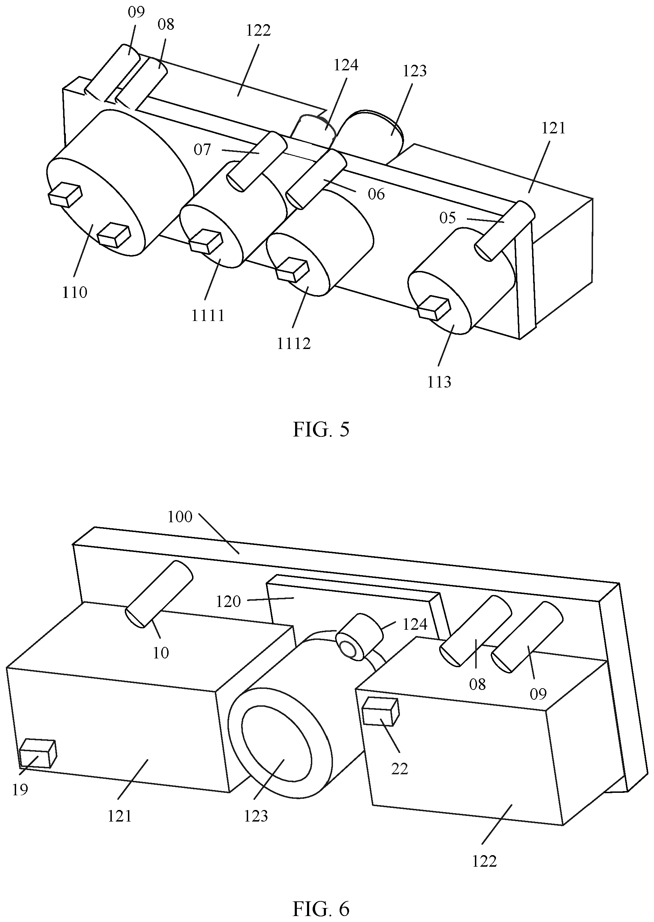

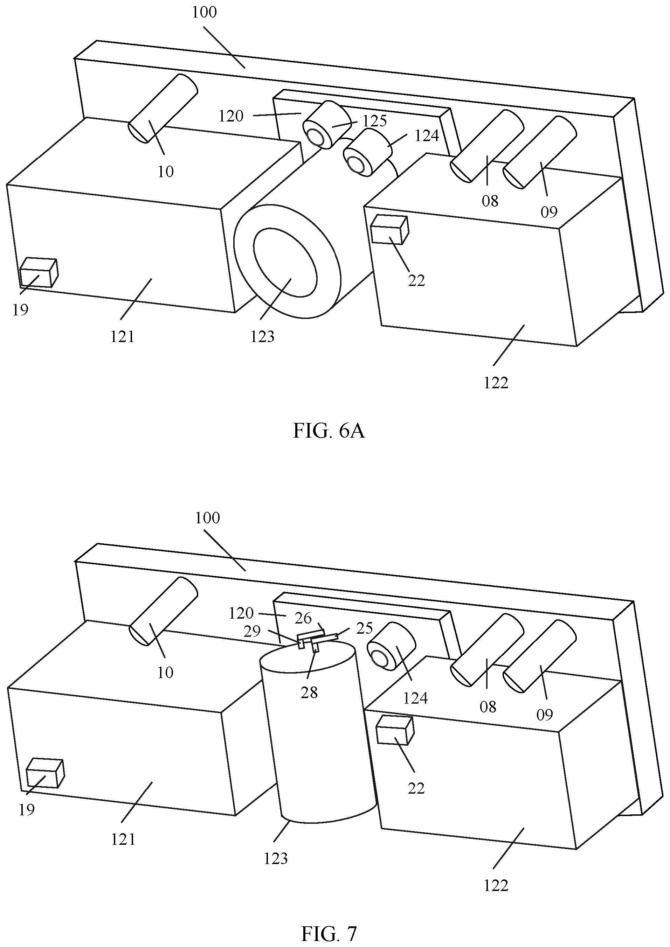

In a possible implementation, for ease of understanding the thermal management integration assembly 00 provided in embodiments of this application from overall appearance, for example, refer to FIG. 5 and FIG. 6. FIG. 5 and FIG. 6 show an example in which the refrigerant container 123 and the expansion valve 124 are integrated on the refrigerant module 120. FIG. 5 is a diagram of overall appearance of the thermal management integration assembly 00 viewed from the first side of the base plate 100 after each component is integrated on the base plate 100. FIG. 6 is a diagram of overall appearance of the thermal management integration assembly 00 viewed from the second side of the base plate 100 after each component is integrated on the base plate 100. It may be understood that FIG. 5 and FIG. 6 are merely examples, and constitute a limitation on embodiments of this application. For example, in the thermal management integration assembly 00 shown in FIG. 5 and FIG. 6, another component (for example, a shut-off valve (shut-off valve, SOV), a three-way valve, or a compressor) may be further integrated on the base plate 100. This is not limited in embodiments of this application. For example, as shown in FIG. 6A, a shut-off valve 125 may be further integrated on the refrigerant module 120. The shut-off valve 125 communicates with the refrigerant flow channel in the refrigerant module 120 through a refrigerant flow channel port provided on the refrigerant module 120. For example, the shut-off valve may also be referred to as a throttle valve or the like. This is not limited in embodiments of this application.

For example, it can be learned from FIG. 6 that the refrigerant container 123 and the expansion valve 124 are located between the first heat exchange device 121 and the second heat exchange device 122. For example, in a specific thermal management refrigerant loop, a refrigerant is pushed by the compressor to enter the first heat exchange device 121. After heat exchange, the refrigerant flows from the first heat exchange device 121 to the refrigerant container 123. Then, the refrigerant flows from the refrigerant container 123 to the expansion valve 124, and flows to the second heat exchange device 122 after passing through the expansion valve 124. After heat exchange, the refrigerant flows out of the second heat exchange device 122, and flows back to the compressor, to form the refrigerant loop. Based on this, in embodiments of this application, disposing the refrigerant container 123 and the expansion valve between the first heat exchange device 121 and the second heat exchange device 122 can reduce a length of the refrigerant flow channel. In this way, the area of the refrigerant module 120 can be reduced, to further reduce costs and a weight of the thermal management integration assembly 00.

For example, in FIG. 6, the refrigerant container 123 is disposed perpendicular to the base plate 100 (also perpendicular to the refrigerant module 120). Specifically, it is assumed that a side that is of the refrigerant container 123 and on which the port 28 and the port 29 are provided is a first side, and a side that faces away from the first side is a second side. In other words, the bottom of the refrigerant container is the second side. In this case, a direction from the second side of the refrigerant container 123 to the first side of the refrigerant container 123 is perpendicular to the refrigerant module. In addition, the port 28 and the port 29 are aligned with and communicate with the port 25 and the port 26 on the refrigerant module 120 directly, respectively. A tank body of the refrigerant container 123 is perpendicular to the refrigerant module 120, which can mitigate impact on the refrigerant loop caused when the refrigerant in the tank body is insufficient to be supplied normally. In addition, having the tank body perpendicular to the refrigerant module can also facilitate replacement with a longer tank body to increase a refrigerant capacity.

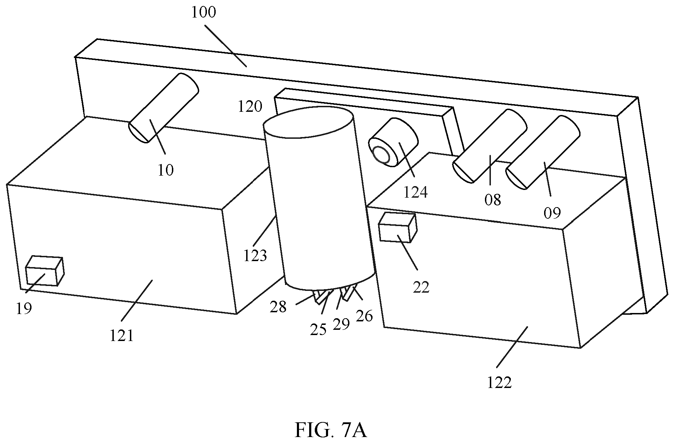

For example, in another possible implementation, the refrigerant container 123 may alternatively be disposed horizontally on the refrigerant module 120. Specifically, a direction from the second side of the refrigerant container 123 to the first side of the refrigerant container 123 is parallel to the refrigerant module 120. For ease of understanding, for example, refer to FIG. 7 and FIG. 7A. FIG. 7 and FIG. 7A are diagrams in which the refrigerant container 123 is disposed horizontally on the refrigerant module 120. A difference is that positions of the refrigerant inlet and the refrigerant outlet on the refrigerant container 123 in FIG. 7 are different from those in FIG. 7A. In such disposition, communication between the port 25 and the port 28 and communication between the port 26 and the port 29 can be implemented through a short pipeline or through welding or the like. For example, positions at which the port 25 and the port 26 are provided on the refrigerant module 120 may adaptively change based on a position at which the refrigerant container 123 is placed. This is not limited in embodiments of this application. Disposing the refrigerant container 123 horizontally on the refrigerant module 120 can further reduce a thickness of the thermal management integration assembly 00.

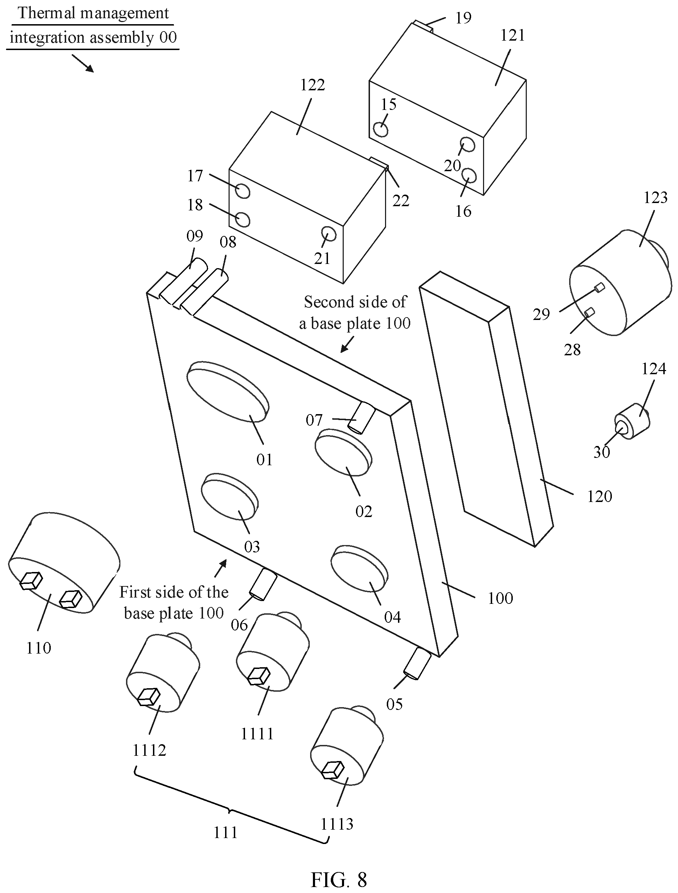

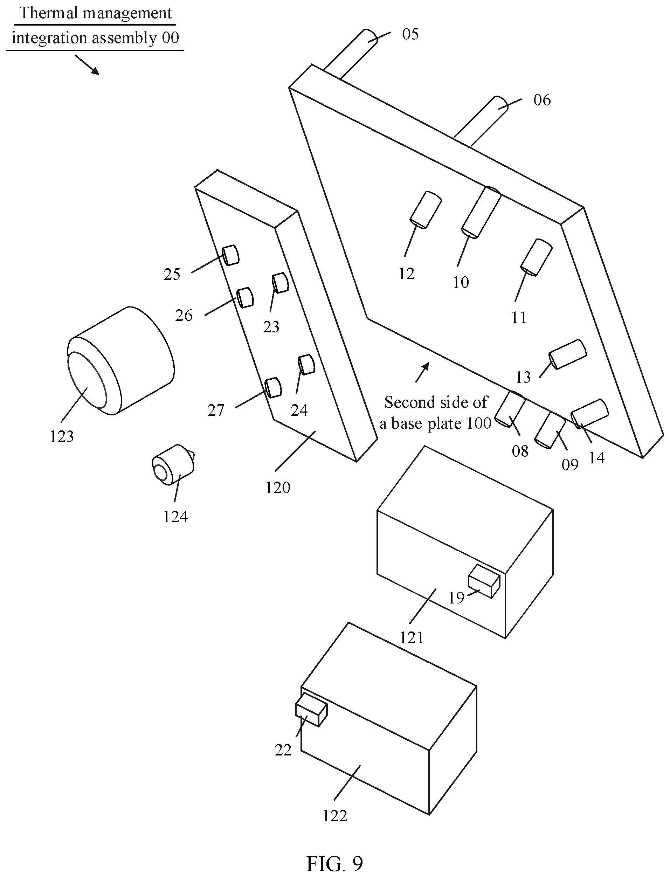

For example, FIG. 1 to FIG. 7 are merely diagrams of embodiments of this application. Specific forms and sizes of components are shown as examples, and forms and sizes of ports are also shown as examples. A form and a size of the base plate 100 are also examples. The base plate 100 may be in any regular square shape, an elliptical shape, or an irregular shape. This is not limited in embodiments of this application. For example, in a possible implementation, if the base plate 100 is in another shape, layout positions of ports and components disposed on the base plate may be adaptively adjusted. For ease of understanding, for example, refer to FIG. 8 and FIG. 9. A shape of the base plate 100 shown in FIG. 8 and FIG. 9 is different from the shape of the base plate 100 shown in FIG. 1 and FIG. 2.

For example, FIG. 8 is an exploded view of the structure of the thermal management integration assembly 00 viewed from the first side of the base plate 100. FIG. 9 is an exploded view of the structure of the thermal management integration assembly 00 viewed from the second side of the base plate 100. It can be learned from FIG. 8 and FIG. 9 that the shape and a size of the base plate 100 are different from those of the base plate 100 shown in FIG. 1 and FIG. 2, and a layout of components disposed on the base plate 100 is also different from the layout shown in FIG. 1 and FIG. 2.

For example, as shown in FIG. 8, the multi-way valve 110, the water pump 111, the water pump 112, and the water pump 113 are still disposed on the first side of the base plate 100. In comparison with FIG. 1, a layout of relative positions of the multi-way valve 110, the water pump 111, the water pump 112, and the water pump 113 changes. For example, the multi-way valve 110, the water pump 111, the water pump 112, and the water pump 113 are disposed at positions in four corners of the base plate 100, respectively. Such adaptive adjustment of the position layout is to reduce intersection of refrigerant flow channels in the base plate 100, to maximize use of the area of the base plate 100 to arrange more flow channels, so as to improve utilization of the base plate 100. For the first side of the base plate 100, for communication relationships between ports on the base plate 100 and the multi-way valve 110, the water pump 111, the water pump 112, and the water pump 113, refer to related descriptions of FIG. 1. Details are not described herein again.

For example, as shown in FIG. 9, the refrigerant module 120, the first heat exchange device 121, and the second heat exchange device 122 are still disposed on the second side of the base plate 100. In comparison with FIG. 2, a layout of relative positions of the refrigerant module 120, the first heat exchange device 121, and the second heat exchange device 122 changes. For example, in FIG. 2, the refrigerant module 120 is disposed in a middle region of the second side of the base plate 100, and the first heat exchange device 121 and the second heat exchange device 122 are disposed in regions on two sides of the second side of the base plate 100, respectively. The refrigerant module 120 is sandwiched between the first heat exchange device 121 and the second heat exchange device 122. In FIG. 9, the refrigerant module 120 is disposed on a side of the second side of the base plate 100, the first heat exchange device 121 and the second heat exchange device 122 are disposed on another side of the second side of the base plate 100, and the first heat exchange device 121 and the second heat exchange device 122 are located side by side on a same side (briefly referred to as a first side) of the refrigerant module 120. In an example, the refrigerant container 123 and the expansion valve 124 are further disposed on the refrigerant module 120, and in this case, the refrigerant container 123 and the expansion valve 124 are located on another side opposite to the first side. In addition, the refrigerant container 123 is disposed close to the first heat exchange device 121, and the expansion valve 124 is disposed close to the second heat exchange device 122. Such disposition can implement a short refrigerant transfer path.

It may be understood that FIG. 8 and FIG. 9 are merely examples, and do not constitute a limitation on embodiments of this application.

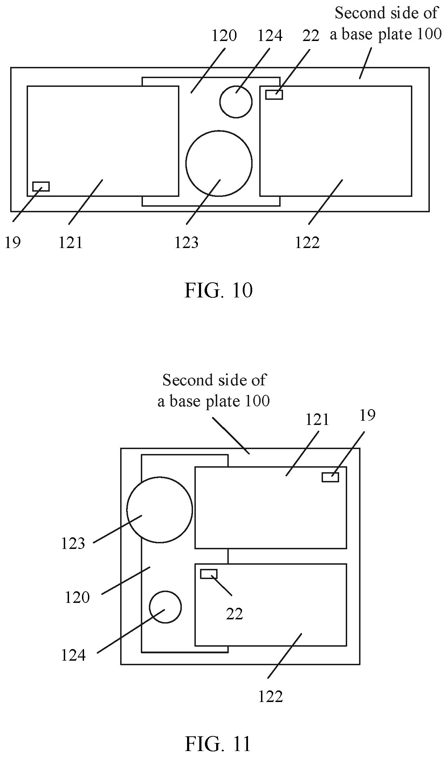

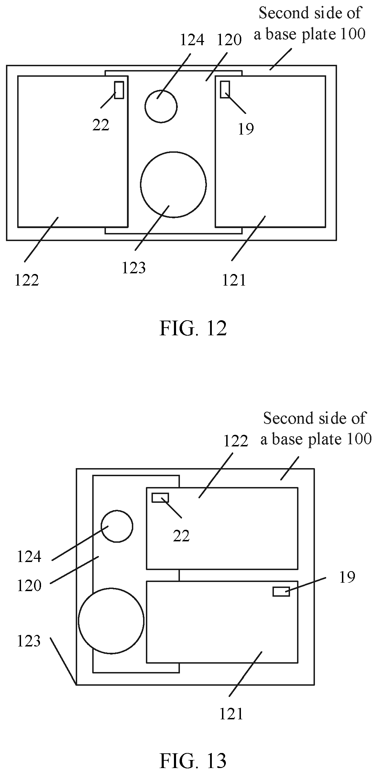

In a possible implementation, layout positions of components on the second side of the base plate 100 are not limited to the layout positions shown in FIG. 2 (or FIG. 4) or FIG. 9, and may be other layout positions. For example, refer to FIG. 10 to FIG. 13. FIG. 10 is a planar diagram of the second side of the base plate 100 in the thermal management integration assembly 00 shown in FIG. 4. FIG. 11 is a planar diagram of the second side of the base plate 100 in the thermal management integration assembly 00 shown in FIG. 9. The planar diagrams of FIG. 10 and FIG. 11 show examples of layout position relationships between the refrigerant module 120, the first heat exchange device 121, the second heat exchange device 122, the refrigerant container 123, and the expansion valve 124 that are integrated on the second side of the base plate 100. In another possible implementation, for layout position relationships between components integrated on the second side of the base plate 100, for example, refer to FIG. 12 or FIG. 13.

For example, in FIG. 12, long edges of the first heat exchange device 121 and the second heat exchange device 122 may be perpendicular to a long edge of the base plate 100. The refrigerant module 120 is disposed in a middle region of the second side of the base plate 100, and the refrigerant container 123 and the expansion valve 124 that are integrated on the refrigerant module 120 are disposed between the first heat exchange device 121 and the second heat exchange device 122.

For example, layout position relationships between the refrigerant module 120, the first heat exchange device 121, the second heat exchange device 122, the refrigerant container 123, and the expansion valve 124 in FIG. 13 are in a mirror relationship with the layout position relationships shown in FIG. 11. To be specific, in FIG. 13, the refrigerant module 120 is disposed on a side of the second side of the base plate 100, the first heat exchange device 121 and the second heat exchange device 122 are disposed on another side of the second side of the base plate 100, and the first heat exchange device 121 and the second heat exchange device 122 are located side by side on a same side (briefly referred to as a first side) of the refrigerant module 120. In an example, the refrigerant container 123 and the expansion valve 124 are further disposed on the refrigerant module 120, and in this case, the refrigerant container 123 and the expansion valve 124 are located on another side opposite to the first side. In addition, the refrigerant container 123 is disposed close to the first heat exchange device 121, and the expansion valve 124 is disposed close to the second heat exchange device 122.

For example, in the layout position relationships shown in FIG. 10 to FIG. 13, the refrigerant container 123 is disposed close to the refrigerant outlet of the first thermal management device 121, the expansion valve 124 is disposed close to the refrigerant inlet of the second heat exchange device 122, and the refrigerant container 123 and the expansion valve 124 are also disposed as close as possible, to greatly shorten the length of the refrigerant flow channel, so as to greatly reduce the area of the refrigerant module 120.

In conclusion, in embodiments of this application, a refrigerant flow channel in a refrigerant base plate is concentrated in a refrigerant module that has a small area, and then two heat exchange devices originally disposed on the refrigerant base plate are directly disposed with the refrigerant module on a base plate integrating a coolant flow channel, so that a height of the refrigerant base plate is reduced. In addition, the refrigerant base plate is made of a metal material with high pressure resistance and is costly in material and manufacturing, but the refrigerant module is much smaller than the original refrigerant base plate, so that costs of materials and manufacturing are reduced, and a weight is also reduced. Based on this, the solution greatly improves a degree of integration of the thermal management integration assembly, and reduces a volume and a weight of the thermal management integration assembly overall, so that occupied space is reduced.

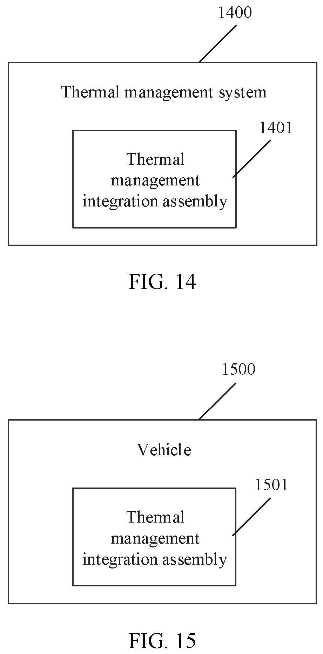

An embodiment of this application further provides a thermal management system. For example, refer to FIG. 14. The thermal management system 1400 may include a thermal management integration assembly 1401. The thermal management integration assembly 1401 may be, for example, the thermal management integration assembly in any one of the foregoing possible implementations. For details, refer to the foregoing descriptions. Details are not described herein again.

An embodiment of this application further provides a vehicle. For example, refer to FIG. 15. The vehicle 1500 may include a thermal management integration assembly 1501. The thermal management integration assembly 1501 may be, for example, the thermal management integration assembly in any one of the foregoing possible implementations. For details, refer to the foregoing descriptions. Details are not described herein again.

It should be understood that, in embodiments of this application, sequence numbers of processes do not mean an execution sequence. The execution sequence of the processes should be determined based on functions and internal logic of the processes, and shall not constitute any limitation on implementation processes of embodiments of this application.

It should be further understood that, when being used in the specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof.

It should be further understood that "one embodiment", "an embodiment", and "a possible implementation" mentioned throughout the specification mean that a specific feature, structure, or characteristic related to the embodiment or the implementation is included in at least one embodiment of this application. Therefore, "in one embodiment" or "in an embodiment" or "a possible implementation" appearing throughout the specification may not necessarily refer to a same embodiment. In addition, these specific features, structures, or characteristics may be combined in one or more embodiments in any appropriate manner.

Finally, it should be noted that the foregoing embodiments are merely intended to describe the technical solutions of this application, but are not intended to limit this application. Although this application is described in detail with reference to the foregoing embodiments, a person of ordinary skill in the art should understand that modifications may still be made to the technical solutions described in the foregoing embodiments or equivalent replacements may still be made to some or all technical features thereof, without departing from the scope of the technical solutions of embodiments of this application.

## Claims

1. A thermal management integration assembly, wherein the thermal management integration assembly comprises a base plate, a refrigerant module, a first heat exchange device, a second heat exchange device, a multi-way valve, and a water pump;
a refrigerant flow channel is disposed in the refrigerant module, and an area of the refrigerant module is less than an area of the base plate;
the base plate comprises a first side and a second side, and an orientation of the first side is opposite to an orientation of the second side;
the multi-way valve and the water pump are disposed on the first side of the base plate, and the multi-way valve and the water pump communicate with a coolant flow channel in the base plate; and
the refrigerant module, the first heat exchange device, and the second heat exchange device are disposed on the second side of the base plate, and the first heat exchange device and the second heat exchange device communicate with the refrigerant flow channel in the refrigerant module.

2. The thermal management integration assembly according to claim 1, wherein a proportion of the area of the refrigerant module to the area of the base plate ranges from 30% to 70%.

3. The thermal management integration assembly according to claim 1, wherein the water pump comprises a first water pump, a second water pump, and a third water pump, and the multi-way valve, the first water pump, the second water pump, and the third water pump are arranged in sequence along a longer edge of the first side of the base plate.

4. The thermal management integration assembly according to any one of claims 1 to 3, wherein
a first refrigerant flow channel port is provided on the refrigerant module;
the first heat exchange device comprises a first refrigerant inlet and a first refrigerant outlet, the first refrigerant inlet is located on a first side of the first heat exchange device, and the first refrigerant outlet is located on a second side that faces away from the first side of the first heat exchange device; and
the first refrigerant inlet is configured to communicate with a compressor, and the first refrigerant outlet is aligned with and communicates with the first refrigerant flow channel port.

5. The thermal management integration assembly according to claim 4, wherein the first heat exchange device comprises a first coolant inlet and a first coolant outlet, and the first coolant inlet and the first coolant outlet are located on the second side of the first heat exchange device;
a first coolant flow channel port and a second coolant flow channel port are provided on the second side of the base plate; and
the first coolant inlet is aligned with and communicates with the first coolant flow channel port, and the first coolant outlet is aligned with and communicates with the second coolant flow channel port.

6. The thermal management integration assembly according to any one of claims 1 to 5, wherein
a second refrigerant flow channel port is provided on the refrigerant module;
the second heat exchange device comprises a second refrigerant inlet and a second refrigerant outlet, the second refrigerant inlet is located on a first side of the second heat exchange device, and the second refrigerant outlet is located on a second side that faces away from the first side of the second heat exchange device; and
the second refrigerant inlet is aligned with and communicates with the second refrigerant flow channel port, and the second refrigerant outlet is configured to communicate with the compressor.

7. The thermal management integration assembly according to claim 6, wherein the second heat exchange device comprises a second coolant inlet and a second coolant outlet, and the second coolant inlet and the second coolant outlet are located on the first side of the second heat exchange device;
a third coolant flow channel port and a fourth coolant flow channel port are provided on the second side of the base plate; and
the second coolant inlet is aligned with and communicates with the third coolant flow channel port, and the second coolant outlet is aligned with and communicates with the fourth coolant flow channel port.

8. The thermal management integration assembly according to any one of claims 1 to 7, wherein the thermal management integration assembly further comprises a refrigerant container, and a third refrigerant flow channel port and a fourth refrigerant flow channel port are provided on the refrigerant module; and
the refrigerant container is integrated on the refrigerant module, and communicates with the refrigerant flow channel in the refrigerant module through the third refrigerant flow channel port and the fourth refrigerant flow channel port, and the refrigerant container is located between the first heat exchange device and the second heat exchange device.

9. The thermal management integration assembly according to claim 8, wherein the refrigerant container comprises a first side and a second side, and an orientation of the first side of the refrigerant container is opposite to an orientation of the second side of the refrigerant container;
a third refrigerant inlet and a third refrigerant outlet are provided on the first side of the refrigerant container, the third refrigerant inlet is aligned with and communicates with the third refrigerant flow channel port on the refrigerant module, and the third refrigerant outlet is aligned with and communicates with the fourth refrigerant flow channel port on the refrigerant module; and
the second side of the refrigerant container is the bottom of the refrigerant container, and a direction from the second side of the refrigerant container to the first side of the refrigerant container is perpendicular to the refrigerant module; or
a direction from the second side of the refrigerant container to the first side of the refrigerant container is parallel to the refrigerant module.

10. The thermal management integration assembly according to any one of claims 1 to 9, wherein the thermal management integration assembly further comprises an expansion valve, a fifth refrigerant flow channel port is provided on the refrigerant module, and the expansion valve is integrated on the refrigerant module, and communicates with the refrigerant flow channel in the refrigerant module through the fifth refrigerant flow channel port; and/or
the thermal management integration assembly further comprises a shut-off valve, a sixth refrigerant flow channel port is provided on the refrigerant module, and the shut-off valve is integrated on the refrigerant module, and communicates with the refrigerant flow channel in the refrigerant module through the sixth refrigerant flow channel port.

11. A thermal management system, wherein the thermal management system comprises the thermal management integration assembly according to any one of claims 1 to 10.

12. A vehicle, wherein the vehicle comprises the thermal management integration assembly according to any one of claims 1 to 10, or the vehicle comprises the thermal management system according to claim 11.
